# EUROPEAN PATENT APPLICATION

(11) **EP 4 438 577 A1**
(43) Date of publication of application: **02.10.2024**
(21) Application number: 23164811.4
(22) Date of filing: 28.03.2023
(51) Int. Cl.: C04B 20/10, C04B 28/04, C04B 38/02, C04B 38/10

(54) **INORGANIC FOAM BASED ON ORDINARY PORTLAND CEMENT**

(71) Applicant: Sika Technology AG, 6340 Baar (CH)
(72) Inventor: The designation of the inventor has not yet been filed
(74) Representative: Sika Patent Attorneys

(57) **Abstract**

A method for preparing a mineral foam comprises: (a) providing an aqueous cementitious slurry comprising a cementitious binder, a foam-stabilizing agent and a set control agent; and (b) foaming the cementitious slurry; wherein the set control agent comprises (i) an α-hydroxy monocarboxylic acid or a salt thereof and (ii) an oxyanion source selected from the group consisting of a borate source and a carbonate source. An accelerator agent selected from the group consisting of an aluminum ion source, an aluminate source and a silicate source may be added to the cementitious slurry. The method allows the use of Ordinary Portland Cement or Limestone Calcined Clay Cements without compromising the final strength of the mineral foam.

## Description

The present invention relates to a process for preparing an inorganic foam based on a Portland cement clinker-based cementitious binder, to the inorganic foams thus obtained and to elements of construction comprising these inorganic foams.

Inorganic foams, also named mineral foams or cement foams, combine advantageous properties such as very low specific weight compared to traditional concrete or other building materials. The foam comprises bubbles more or less distant from each other that are gas pockets contained in a solid envelope of mineral binder. Due to the pores or empty spaces that it comprises, it is a material that is significantly lighter than traditional concrete.

Inorganic foams can be used as insulation material, e.g., as a thermal insulator, acoustic insulator or acoustic absorber as well as construction material with a low density. Advantages of using inorganic foams lie in the reduced CO₂ footprint compared to organic (PU, EPS) and other inorganic (AAC, mineral wool) materials, better health and safety properties, no limitation of application due to possible fire classes, recyclability to 100% in the mineral material circle and higher flexibility by a flexible variation of density depending on application. Additionally, lower energy requirements for raw materials and production reduces impact of product cost in face of rising energy prices of limited resources.

Currently, inorganic foams are mainly produced using surfactants or proteins as air stabilizer. Since this type of air stabilization is prone to defoaming and coalescence, fast setting cements, such as calcium sulfoaluminate (CSA), calcium aluminate (CA) or accelerated standard cements are used. Slower setting leads to significant collapse of the foam structure and volume due to the instability of used air stabilizers. This requirement for fast setting impacts robustness of the foams to changing environmental conditions. A high temperature in summer might lead to a setting of the cement in the mixer, while lower temperatures in the winter delay setting, leading to a defoamed foam far away from the desired properties.

Particle stabilization allows for the creation of a stable foam. No fast setting is required to produce homogeneous foams. Currently, a special CSA-cement is used nonetheless, offering the possibility to accelerate the cement down to open times of less than 30 mins.

WO 2018/162381 relates to a process for preparing a particle-stabilized inorganic foam based on calcium sulfoaluminate, to a particle-stabilized inorganic foam based on calcium sulfoaluminate, to a cellular material obtainable by hardening and optionally drying the particle-stabilized inorganic foam based on calcium sulfoaluminate, and to a composition for preparing an inorganic foam formulation for providing a particle-stabilized inorganic foam based on calcium sulfoaluminate.

Due to the high cost of CSA-cements, applications are limited to low density foams (mainly thermal insulation), where a minimal amount of binder is needed. To broaden the applications, OPC as a cheaper binder could be an alternative to CSA-cements.

If Ordinary Portland Cement or Limestone Calcined Clay Cements (LC3 cements) are used, the demolding of foams is slow because of long curing times required to reach green strength. If common accelerators are used to reduce the curing time, the final strength of the mineral foam is substantially reduced.

It is an object of the present invention to provide a method for preparing a mineral foam that can overcome main hurdles like high material cost, high cement clinker content or low strength to enable the widespread adaption of mineral foams in the construction sector. In preferred embodiments, the invention also addresses the issue of long open times to allow reduced turnover times.

Accordingly, the invention relates to a method for preparing a mineral foam comprising:
a. providing an aqueous cementitious slurry comprising
   a cementitious binder,
   a foam-stabilizing agent, and
   a set control agent;
b. foaming the cementitious slurry;
wherein the set control agent comprises (i) an α-hydroxy monocarboxylic acid or a salt thereof and (ii) an oxyanion source selected from the group consisting of a borate source and a carbonate source.

A set control agent is made to be present in the aqueous cementitious slurry comprising the cementitious binder and foam-stabilizing agent. The set control component controls the hydration process and ensures relatively consistent rheological properties, preferably consistent viscosity and yield stress. Incorporation of the setting control agent into the aqueous cement slurry allows to obtain mineral foams with improved final strength.

In a preferred embodiment, the method comprises adding an accelerator agent solution to the cementitious slurry. The accelerator agent comprises at least one agent selected from the group consisting of an aluminum ion source, an aluminate source and a silicate source. This embodiment uses a set control/accelerator combination for accelerating setting time for formulations based on sustainable binders. The set control/ accelerator combination allows for fast demolding and reduced turnover times. By splitting the process in two stages, the cementitious slurry typically has a long open time, but sets rapidly when the accelerator agent solution is added. This reduces cycle times and maximizes mold usage. Addition of the accelerator agent solution ensures fast strength increase and allows for faster demolding shortly after filling in the mold.

### Set control agent

The set control agent comprises (i) an α-hydroxy monocarboxylic acid or a salt thereof and (ii) an oxyanion source selected from the group consisting of a borate source and a carbonate source. The carbonate source is selected from the group consisting of inorganic carbonates having an aqueous solubility of 0.1 g·L⁻¹ or more, organic carbonates, and mixtures thereof.

It is believed that the component (i) an α-hydroxy monocarboxylic acid or a salt thereof in combination with (ii) an oxyanion source selected from the group consisting of a borate source and a carbonate source retard the formation of ettringite from the aluminate phases originating from the cementitious binder.

Suitable α-hydroxy monocarboxylic acids and salts thereof and include glycolic acid, gluconic acid, lactic acid, 2,3-dihydroxypropanoic acid, and their salts and mixtures thereof. The hydroxy monocarboxylic acid can be employed as the free acid or in a partially or completely neutralized form, i.e., as a salt. The cation is not particularly limited and may be selected from the group consisting of alkali metals, such as sodium or potassium, and ammonium cations. Sodium gluconate is particularly preferred.

The amount of the α-hydroxy monocarboxylic acids or salt thereof may be in the range of from 0.01 to 2.0 wt.-%, preferably 0.01 to 0.7 wt.-%, more preferably 0.02 to 0.3 wt.-%, relative to the amount of cementitious binder.

The oxyanion source is selected from the group consisting of a borate source and a carbonate source.

The presence of a borate or carbonate source ensures that the mixing water is initially highly concentrated in borate or carbonate ions. Borate or carbonate ions are believed to adsorb onto mineral phase surfaces along with the α-hydroxy monocarboxylic acid or salt thereof. The latter will also partly remain in the pore solution and initially prevent ettringite to be formed.

The amount of the oxyanion source may be in the range of from 0.1 to 3 wt.-%, preferably 0.5 to 2.0 wt.-%, more preferably 0.5 to 1 wt.-%, relative to the amount of cementitious binder.

The borate source usually comprises a rapidly soluble, inexpensive, borate compound. Suitable borate sources include borax, boric acid, colemanite, and hexahydroborate, and mixtures thereof.

Only carbonate sources having a sufficient degree of aqueous solubility are suitable for achieving the desired effect. The carbonate source may be an inorganic carbonate having an aqueous solubility of 0.1 g·L⁻¹ or more at 25°C. The aqueous solubility of the inorganic carbonate is suitably determined in water with a starting pH value of 7. It is understood that the pH value at the solubility limit is higher than the starting pH value.

The inorganic carbonate may be selected from the group consisting of alkaline metal carbonates such as sodium carbonate, sodium bicarbonate, potassium carbonate or lithium carbonate; and alkaline earth metal carbonates satisfying the required aqueous solubility, such as magnesium carbonate; and mixtures thereof. It is also possible to use guanidine carbonate as an inorganic carbonate. Sodium carbonate and sodium bicarbonate are especially preferred, in particular sodium carbonate.

Alternatively, the carbonate source is selected from the group consisting of organic carbonates. "Organic carbonate" denotes an ester of carbonic acid. The organic carbonate is hydrolyzed in the presence of the cementitious system to release carbonate ions. In an embodiment, the organic carbonate is selected from the group consisting of ethylene carbonate, propylene carbonate, glycerol carbonate, dimethyl carbonate, di(hydroxyethyl)carbonate, and mixtures thereof. Preference is given to ethylene carbonate, propylene carbonate, glycerol carbonate, and mixtures thereof, in particular ethylene carbonate and/or propylene carbonate. Mixtures of inorganic carbonates and organic carbonates can as well be used.

In a preferred embodiment, the set control agent additionally comprises a polymeric polycarboxylic acid.

The term "polymeric polycarboxylic acid" includes polymeric compounds constituted of monomeric units incorporating carboxylic acid functionalities, and, optionally, further monomeric units. The polymeric polycarboxylic acid can be employed as the free acid or in a partially or completely neutralized form, i.e., as a salt. The cation is not particularly limited and may be selected from the group consisting of alkali metals, such as sodium or potassium, and ammonium cations.

Preferably, the polycarboxylic acid has a carboxylic acid equivalent weight of 333 or less. The carboxylic acid equivalent weight can be determined by weighing in a sample of the polymeric polycarboxylic acid and titration of the carboxylic acid groups. Alternatively, for a polymeric polycarboxylic acid with known carboxylic group density the carboxylic acid equivalent weight of the polymeric polycarboxylic acid may be determined as the reciprocal of the carboxylic group density, expressed as equivalent per gram of polymer. This means, for example, that a polymeric polycarboxylic acid having a milliequivalent number of 3.0 meq/g has a carboxylic acid equivalent weight of 1/0.003 = 333.

The molecular weight of the polymeric polycarboxylic acids is 25,000 g/mol or less, preferably the molecular weight is in the range of 1,000 to 25,000 g/mol, most preferably 1,000 to 5,000 g/mol.

Effective polymeric polycarboxylic acids have a carboxylic group density within a certain range. Preferably, the milliequivalent number is 3.0 meq/g or higher, preferably 3.0 to 17.0 meq/g, more preferably 5.0 to 17.0 meq/g, most preferably 5.0 to 14.0 meq/g.

The polymeric polycarboxylic acid can be employed as the free acid or in a partially or completely neutralized form, i.e., as a salt. The cation is not particularly limited and may be selected from the group consisting of alkali metals, such as sodium or potassium, and ammonium cations.

Preferably, the polymeric polycarboxylic acid or salt thereof is selected from the group consisting of homopolymers and copolymers of α,β-ethylenically unsaturated carboxylic acids; and copolymers of at least one α,β-ethylenically unsaturated carboxylic acid and at least one sulfo group containing monomer.

Suitable α,β-ethylenically unsaturated carboxylic acids include acrylic acid, methacrylic acid and polymaleic acid.

Suitable sulfo group containing monomers include 2-propene-1-sulfonic acid (allylsulfonic acid), 2-methyl-2-propene-1-sulfonic acid (methallylsulfonic acid), vinylsulfonic acid, styrenesulfonic acids, i.e. 2-styrenesulfonic acid, 3-styrenesulfonic acid and 4-styrenesulfonic acid, and 2-acrylamido-2-methylpropane sulfonic acid (AMPS).

Preferably, the polymeric polycarboxylic acid is a homopolymer of acrylic acid, a homopolymer of methacrylic acid, a copolymer of acrylic acid and maleic acid, or a copolymer of methacrylic acid and maleic acid, most preferably a homopolymer of acrylic acid.

Examples of suitable polymeric components are commercially available from BASF SE under the trade name SOKALAN^{®}, such as SOKALAN^{®} PA 20, SOKALAN^{®} PA 15, SOKALAN^{®} CP 10S, SOKALAN^{®} PA 25 CL PN, SOKALAN^{®} CP 12S, SOKALAN^{®} PA 40. "CP" generally designates a copolymer whereas "PA" generally designates a polyacrylate.

The amount of polymeric polycarboxylic acid or salt thereof, if present, may be in the range of from 0.01 to 2 wt.-%, preferably 0.2-1.2 wt.-%, more preferably 0.2-0.6 wt.-%, relative to the amount of cementitious binder.

The set control agent is present in the mixing water and/or the dry mix. In a practical embodiment, the set control agent is dissolved in a part of the mixing water, and the dry mix, comprising the cementitious binder, optionally an extraneous aluminate source, and optionally an extraneous sulfate source, is added to the mixture. The remainder of the water is then added to adjust consistency.

In an alternative practical embodiment, the set control agent is incorporated to the dry mix before the addition of mixing water.

### Accelerator Agent

In a preferred embodiment, an accelerator agent solution comprising at least one agent selected from the group consisting of an aluminum ion source, an aluminate source and a silicate source is incorporated into the cementitious slurry. Addition of the accelerator agent solution may occur before the foaming of the cementitious slurry or substantially concurrent with the foaming of the cementitious slurry or timely overlapping with the foaming of the cementitious slurry.

The invention also envisages the use of combinations of accelerator agents, for example the combination of an aluminum ion source and a silicate source. In order to avoid undesired interactions of the accelerator agents with each other, the dosage of the individual accelerator agents into the cementitious slurry preferably occurs temporally or spatially separated. For example, if the cementitious slurry is conveyed by pumping or pneumatically conveying through tubing or hose lines, introduction of the accelerator agents into the cementitious slurry can occur by dosing devices at different positions of the tubing or hose lines. Alternatively, a stream of the cementitious slurry can be divided into partial streams, an accelerator can be added to each partial stream, and the partial streams can be combined again.

The accelerator agent acts to induce the production of ettringite, a highly hydrated sulfoaluminate crystalline phase containing several water molecules in its structural unit. During its formation, a considerable amount of mixing water is consumed, thus inducing a dramatic increase in the viscosity of the cement mixture, which results in a reduction of the setting time and excellent mechanical strength development.

The accelerator agent is water soluble. "Water soluble" for the purpose of the present invention means that the solubility of an agent in water at 25°C and atmospheric pressure is 0.1 g L⁻¹ or more, preferably 1 g L⁻¹ or more, or more preferred 100 g L⁻¹ or more.

According to an embodiment of the invention, the accelerator agent solution comprises an aluminum ion source. Suitably, the aluminum ion source is selected from the group consisting of aluminum salts, aluminum complexes, and mixtures thereof, preferably aluminum sulfate.

The source of aluminum ions may include alkali-free accelerators based on aluminum compounds, e.g., aluminum salts such as sulfates, nitrates, fluorides and/or their hydrates; aluminum oxides; and aluminum hydroxides. The source of aluminum ions may be selected from the group consisting of aluminum salts, aluminum complexes, and mixtures thereof. Preferably, the source of aluminum ions is selected from the group consisting of aluminum salts, especially aluminum sulfates.

Preferably, the amount of the source of aluminum ions in the setting accelerator agent is in the range of from 0.0005 to 0.05 mol, more preferably 0.004 to 0.012 mol, per 100 g of cementitious binder.

Preferably, the amount of sulfate in the source of aluminum ions is in the range of from 0.0008 to 0.075 mol, more preferably 0.006 to 0.02 mol, per 100 g of cementitious binder.

Beside the source of aluminum ion source, the accelerator agent may contain additives to provide shelf stability and other desirable properties to the accelerator agent. Formulations of the accelerator agents may be stabilized by various chemicals. Examples of such stabilizers include organic acids such as carboxylic acids, dicarboxylic acids, hydroxycarboxylic acids, aminocarboxylic acids, phosphoric acid, phosphorous acid, phosphonic acids, sulfamic acid; inorganic acids such as sulfuric acid, nitrous acid, phosphoric acid, phosphorous acid, hydrofluoric acid, hexafluorosilicic acid, and mixtures thereof; urea; polymeric stabilizers, such as polyacrylamides, polycarboxylates, polysulfonates, and copolymers and mixtures thereof; aluminosilicates such as attapulgite, sepiolite and bentonite; and colloidal silica. Furthermore, setting accelerator agent may additionally comprise calcium and magnesium compounds such as for example sulfates, as well as amines, for example alkanolamines such as diethanolamine, triethanolamine, diisopropanolamine and triisopropanolamine and mixtures thereof.

Although not an essential component, a water-soluble magnesium salt may be contained in the aluminum ion source-based accelerator agent. Any such salt may be used, but the preferred salts are magnesium carbonate, or magnesium sulfate or mixtures of these salts. While the magnesium sulfate used in this invention may be any magnesium sulfate, the preferred magnesium is the hydrate MgSO₄·7H₂O, known as Epsom Salts.

According to another embodiment of the invention, the accelerator agent solution comprises an aluminate source. As aluminate source, alkali metal aluminates, such as sodium aluminate, are preferred.

According to another embodiment of the invention, the accelerator agent solution comprises a silicate source. The silicate source may be selected from the group consisting of water-soluble alkali metal silicates and quaternary ammonium silicates. A preferred silicate source is sodium silicate.

Alkali metal silicates are commercial available as waterglass. Waterglass can be obtained by the reaction of alkali metal carbonates with quartz sand (silicon dioxide). However, they can also be produced from mixtures of reactive silicas with the appropriate aqueous alkali metal hydroxides.

As the waterglass, the alkali metal silicates of the following formula may be used:

m SiO₂ · n M₂O,

wherein M is an alkali metal, preferably Li, Na or K or a mixture thereof, and the alkali metal silicate has a molar ratio m:n (also termed "modulus") from 0.5 to 5, preferably from 1 to 4, more preferably from 1.7 to 3.3.

The waterglass is preferably a sodium waterglass, potassium waterglass or lithium waterglass and most preferably a sodium waterglass. However, it is also possible to use a mixture of the waterglasses mentioned.

Potassium waterglasses are mainly marketed as aqueous solutions because they are very hygroscopic; sodium waterglasses in the advantageous modulus range are also obtainable commercially as solids. The solids contents of commercially available aqueous waterglass solutions are generally from 20 to 60 wt.-%, preferably from 40 to 60 wt.-%.

Alternatively, or in addition to, the silicate source can be a quaternary ammonium silicate, such as tetraalkyl ammonium silicate (including hydroxy- and alkoxy-containing alkyl groups generally of from 1 to 4 carbon atoms in the alkyl or alkoxy group). The most preferable quaternary ammonium silicate is tetramethyl ammonium silicate.

In view of the ease and efficiency of incorporation, the setting accelerator agent preferably comprises an aqueous solution of the silicate source. The silicates form a number of structures in alkaline solution, including orthosilicate (SiO₄⁴⁻), pyrosilicate (Si₂O₇⁶⁻) and longer linear structures, and cyclic and branched structures, all of which are in dynamic equilibrium.

Preferably, the amount of the silicate source introduced by the setting accelerator agent is in the range from 0.03 to 10 wt.-%, per 100 g of cementitious binder.

### Foam-stabilizing agent

The aqueous cementitious slurry comprises a foam-stabilizing agent. Suitably, the foam-stabilizing agent is selected from the group consisting of foam-stabilizing inorganic particles, surfactants, proteins and combinations thereof.

The foam-stabilizing agent is present in the mixing water and/or the dry mix together with the set control agent and the cementitious binder.

The term "foam-stabilizing particles" is known in the art and may refer to pickering particles. Inorganic particles that have been subjected to pre-treatment with a surface modifier may be used, including inorganic particles that have been pre-treated with an amphiphile. In a preferred embodiment of the invention, the foam-stabilizing inorganic particles are inorganic particles treated with an amphiphilic compound.

The term "inorganic particles" as used herein preferably refers to inorganic particles selected from the group consisting of:
- Oxides, including pure and mixed metal oxides (particularly aluminum oxide, silicon dioxide, spinels, cerium-gadoliniumoxide, zirconium oxide, magnesium oxide, tin oxide, titanium oxide and cerium oxide);
- Hydroxides (particularly aluminum hydroxide, calcium hydroxide, magnesium hydroxide, very particularly aluminum hydroxide);
- Carbides (particularly silicon carbide, boron carbide); e Nitrides (particularly silicon nitride, boron nitride);
- Phosphates (particularly calcium phosphates, such as tri-calciumphosphate, hydroxyapatite);
- Carbonates (particularly nickel carbonate, calcium carbonate (ground limestone or precipitated calcium carbonate), magnesium carbonate);
- Silicates (particularly silicon dioxide, silica fume, fly ash, quartz, ground glasses, slag, calcium silicates, mullite, cordierite, clay minerals like kaolin or bentonite, zirconium silicate, zeolites, diatomaceous earth, very particularly silica fume, clay minerals, zirconium silicate; specifically clay minerals);
- Sulfates (particularly calcium sulfate).

Preferably, the inorganic particles are selected from the group consisting of silica particles, alumina particles, zirconia particles, calcium carbonate particles and mixtures thereof.

The particle size of the inorganic particles may vary within a broad range. For powders (primary particles), suitable median particle sizes D₅₀ range from 30 nm to 300 µm, preferably from 100 nm to 250 µm, more preferably from 100 nm to 150 µm, even more preferably from 100 nm to 100 µm. In a further embodiment, suitable particle sizes range from 100 nm to 10 µm, preferably 100 nm to 2 µm. It was found that the particle size distribution is of less importance. Good foams can be obtained with narrow as well as with broad particle size distributions.

In a preferred embodiment of the invention, the at least one group of inorganic particles has a median particle size D₅₀ measured by dynamic light scattering in the range of from 30 nm to 300 µm.

The term "particle size (Dₓ)" refers to the diameter of a particle distribution, wherein x % of the particles have a smaller diameter. The D₅₀ particle size is thus the median particle size. The Dₓ particle size can e.g. be measured by laser diffraction or dynamic light scattering (DLS) methods. According to the present invention dynamic light scattering (DLS) according to ISO 22412:2008 is preferably used. Dynamic light scattering (DLS), sometimes referred to as Quasi-Elastic Light Scattering (QELS), is a non-invasive, well-established technique for measuring the size and size distribution of molecules and particles typically in the submicron region. In the present invention the particles were characterized, which have been dispersed in a liquid, preferably water or ethanol. The Brownian motion of particles or molecules in suspension causes laser light to be scattered at different intensities. Analysis of these intensity fluctuations yields the velocity of the Brownian motion and hence the particle size using the Stokes-Einstein relationship. The distribution can be a volume distribution (Dᵥ), a surface distribution (Dₛ), or a number distribution (Dₙ). In context of this application, the Dₓ value refers to a number distribution, wherein x(number) % of the particles have a smaller diameter.

The term "amphiphilic compound" is known in the art and relates to organic compounds having an apolar part (also identified as tail or group R) and a polar part (also identified as head group). Accordingly, suitable amphiphilic molecules contain a tail coupled to a head group, typically by covalent bonds. Such amphiphilic molecules typically contain one tail and one head group, but may also contain more than one head group.

The tail can be aliphatic (linear or branched) or cyclic (alicyclic or aromatic) and can carry substituents. Such substituents are e.g. -CₙH₂ₙ₊₁ with n≤8, secondary-OH, secondary-NH₂, etc. Preferred tails are optionally substituted linear carbon chains of 2 to 8 carbon atoms, more preferably linear carbon chains of 3 to 8, 4 to 8 or 5 to 8 carbon atoms. Throughout the present specification, "secondary -OH" and "secondary -NH₂" shall mean that the resulting substituted tail group constitutes a secondary alcohol or a secondary amine. The head groups that are coupled to the tail preferably are ionic groups, ionizable groups and/or polar groups. Examples of possible head groups and corresponding salts are specified in Table 1 below (wherein the tail is designated as R).

**Table 1 - Examples of possible head groups and corresponding salts**

| | |
|---|---|
| Phosphates | 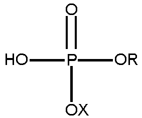 X: H, CₙH₂ₙ₊₁ (n<7), alkali metals |
| Phosphonates | 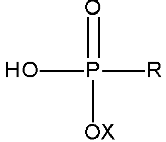 X: H, CₙH₂ₙ₊₁ (n<7), alkali metals |
| Sulfates | 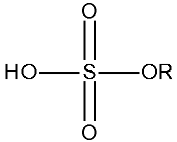 |
| Sulfonates | 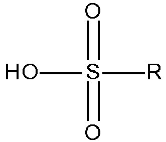 |
| Alcohols | HO-R |
| Amines | 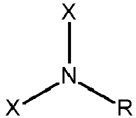 X: H, CₙH₂ₙ₊₁ (n<7) |
| Amides | 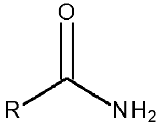 |
| Pyrrolidines | 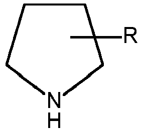 |
| Gallates | 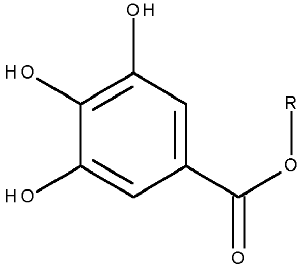 |
| Carboxylic acids | 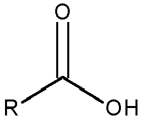 |

Preferred head groups are selected from the group consisting of carboxylic acid groups, gallates, amines and sulfonates. Particularly preferred head groups are selected from the group consisting of carboxylic acid groups (i.e. -C(O)OH groups), gallates and amine groups where X preferably represents H or methyl. A preferred carboxylic acid is enanthic acid (heptanoic acid). A preferred gallate is butyl gallate. A preferred amine is heptylamine. Carboxylic acid groups are most preferred.

The amphiphilic molecules reduce the surface tension of an air-water interface to values lower than or equal to 65 mN/m for concentrations lower than or equal to 0.5 mol/l.

Preferably, amphiphilic molecules have a critical micelle concentration (CMC) higher than 10 µmol/l and/or they have a solubility higher than 1 µmol/l.

The amphiphilic compound comprises at least one polar head group and at least one apolar tail group, wherein the at least one head group is selected from the group consisting of phosphates, phophonates, sulfates, sulfonates, alcohols, amines, amides, pyrrolidines, gallates, and carboxylic acids; and wherein the at least one tail group is selected from the group consisting of an aliphatic or an aromatic or a cyclic group with 2 to 8 carbon atoms, wherein the carbon atoms are optionally substituted with one or more, same or different substituents selected from the group consisting of C₁-C₆-alkyl, secondary -OH, and secondary -NH₂.

In a preferred embodiment of the invention, the amphiphilic compound comprises at least one head group selected from the group consisting of a carboxylic group, a 3,4,5-trihydroxybenzoyloxy group and an amino group, and at least one tail group selected from aliphatic groups with 2 to 8 carbon atoms.

It is to be understood that upon combining the inorganic particles as defined herein with the amphiphilic compounds as defined herein hydrophobized inorganic particles are formed. The term "hydrophobized inorganic particles" relates to inorganic particles, wherein the particle's surface is modified with amphiphilic molecules, so as to reduce the hydrophilic properties of the inorganic particle. Surface modification in this context means that the amphiphilic compounds are adsorbed on the particle's surface.

The amount of amphiphilic compound per inorganic particle BET surface is from 0.5 to 160 µmol/m², preferably from 10 to 140 µmol/m², more preferably from 20 to 120 µmol/m². Briefly, the multi point BET method may include introducing a suitable amount of the inorganic particles into a BET tube, and then degassing the sample using flowing nitrogen at a temperature of 60°C for a period of time from about 5.0 hours prior to analysis. The multi point surface area may be determined using nitrogen as the adsorbate gas at 77.350 Kelvin. A cross-sectional area of the nitrogen adsorbate of 16.200 square angstroms may be used to calculate surface area. Various apparatus are commercially available for conducting this analysis and determining the BET of the particles. One example of such an apparatus is a Nova 800 (Quantachrome Instruments).

Alternatively or in addition, surfactants may be used as foam-stabilizing agent. Surfactants include non-ionic surfactants, anionic surfactants, cationic surfactants, zwitterionic surfactants.

Non-ionic surfactants include fatty alcohols, cetyl alcohol, stearyl alcohol, and cetostearyl alcohol (comprising predominantly cetyl and stearyl alcohols), and oleyl alcohol. Further examples include polyethylene glycol alkyl ethers (Brij) CH₃-(CH₂)₁₀₋₁₆-(O-C₂H₄)₁₋₂₅-OH such as octaethylene glycol monododecyl ether or pentaethylene glycol monododecyl ether; polypropylene glycol alkyl ethers CH₃-(CH₂)₁₀₋₁₆-(O-C₃H₆)₁₋₂₅-OH; glucoside alkyl ethers CH₃-(CH₂)₁₀₋₁₆-(O-glucoside)₁₋₃-OH such as decyl glucoside, lauryl glucoside, octyl glucoside; polyethylene glycol octylphenyl ethers C₈H₁₇-(C₆H₄)-(O-C₂H₄)₁₋₂₅-OH such as Triton X-100; polyethylene glycol alkylphenyl ethers C₉H₁₉-(C₆H₄)-(O-C₂H₄)₁₋₂₅-OH such as nonoxynol-9; glycerol alkyl esters such as glyceryl laurate; polyoxyethylene glycol sorbitan alkyl esters such as polysorbate; sorbitan alkyl esters such as spans; cocamide MEA, cocamide DEA; dodecyldimethylamine oxide; block copolymers of polyethylene glycol and polypropylene glycol such as poloxamers; polyethoxylated tallow amine (POEA). Preferred non-ionic surfactants also include alkyl polyglucosides. Alkyl polyglucosides generally have the formula H-(C₆H₁₀O₅)ₘ-OR¹, where (C₆H₁₀O₅) is a glucose unit and R¹ is a C₆-C₂₂-alkyl group, preferably a C₈-C₁₆-alkyl group and in particular a C₈-C₁₂-alkyl group, and m = from 1 to 5.

Anionic surfactants contain anionic functional groups at their head, such as sulfate, sulfonate, phosphate, and carboxylates. Prominent alkyl sulfates include ammonium lauryl sulfate, sodium lauryl sulfate (sodium dodecyl sulfate, SLS, or SDS), and the related alkylether sulfates sodium laureth sulfate (sodium lauryl ether sulfate or SLES), and sodium myreth sulfate. Others include docusate (dioctyl sodium sulfosuccinate), perfluorooctanesulfonate (PFOS), perfluorobutanesulfonate, alkyl-aryl ether phosphates, alkyl ether phosphates. Preferred carboxylates include the alkyl carboxylates, such as sodium stearate. More specialized species include sodium lauroyl sarcosinate and carboxylate-based fluorosurfactants such as perfluorononanoate, perfluorooctanoate (PFOA or PFO).

Cationic surfactants include, dependent on the pH, primary, secondary, or tertiary amines: Primary and secondary amines become positively charged at a pH below 10. An example is octenidine dihydrochloride. Furthermore, cationic surfactants include permanently charged quaternary ammonium salts, such as cetrimonium bromide (CTAB), cetylpyridinium chloride (CPC), benzalkonium chloride (BAC), benzethonium chloride (BZT), dimethyldioctadecylammonium chloride, dioctadecyldimethylammonium bromide (DODAB).

Zwitterionic (amphoteric) surfactants have both cationic and anionic centers attached to the same molecule. The cationic part is based on primary, secondary, or tertiary amines or quaternary ammonium cations. The anionic part can be more variable and include sulfonates, as in the sultaines CHAPS (3-[(3-Cholamidopropyl)dimethylammonio]-1-propanesulfonate) and cocamidopropyl hydroxysultaine. Betaines such as cocamidopropyl betaine have a carboxylate with the ammonium. The most common biological zwitterionic surfactants have a phosphate anion with an amine or ammonium, such as the phospholipids phosphatidylserine, phosphatidylethanolamine, phosphatidylcholine, and sphingomyelins.

The proportion of the surfactant can vary over a broad range. The surfactant may be present in an amount of up to 5 wt.-%, preferably up to 1.5 wt.-%.

Alternatively or in addition, proteins may be used as foam-stabilizing agent. Non-limiting examples of proteins are proteins of animal origin, such as bovine serum albumin, egg ovalbumin, milk caseins, beta-lactoglobulin or keratin, or proteins of plant origin, such as soy-based protein. A protein with a molecular weight of 1,000 to 50,000 Daltons may suitably be used.

### Polyol

As an optional ingredient, the method of the invention may involve a polyol. In a preferred embodiment, at least one of the set control agent and the acceleration agent comprises a polyol.

The polyol is employed in an amount of 0.05 to 2.5 wt.-%, preferably 0.15 to 0.5 wt.-%, relative to the amount of cementitious binder.

It is believed that polyols such as glycerol chelate calcium ions of e.g. calcium sulfate or C3A. As a result, calcium ion dissociation is accelerated. Chelation of calcium ions also stabilizes calcium in solution and accelerates the dissolution of calcium aluminate phases, thereby rendering aluminate from these calcium aluminate phases more accessible.

"Polyol" is intended to denote a compound having at least two alcoholic hydroxyl groups in its molecule. Useful polyols have at least 3 alcoholic hydroxyl groups in its molecule, for example 3, 4, 5 or 6 alcoholic hydroxyl groups. Polyols having vicinal hydroxyl groups are preferred. Polyols having at least three hydroxyl groups bound to three carbon atoms in sequence are most preferred.

The ability of the polyol to chelate calcium ions and thereby stabilize calcium in solution can be assessed by a calcium aluminate precipitation test. In an embodiment, the polyol, in a calcium aluminate precipitation test in which a test solution, obtained by supplementing 400 mL of a 1 wt.-% aqueous solution of the polyol with 20 mL of a 1 mol/L NaOH aqueous solution and 50 mL of a 25 mmol/L NaAlO₂ aqueous solution, is titrated with a 0.5 mol/L CaCl₂ aqueous solution at 20°C, inhibits precipitation of calcium aluminate up to a calcium concentration of 75 ppm, preferably 90 ppm.

The test detects the precipitation of calcium aluminate by turbidity. Initially, the test solution is a clear solution. The clear test solution is titrated with a CaCl₂ aqueous solution at a constant dosage rate of, e.g., 2 mL/min, as described above. With ongoing addition of CaCl₂, precipitation of calcium aluminate results in a change of the optical properties of the test solution by turbidity. The titration endpoint, expressed as the maximum calcium concentration (as Ca²⁺), before the onset of turbidity can be calculated from the elapsed time to the onset point.

In a preferred embodiment, the polyol is selected from the group consisting of compounds consisting of carbon, hydrogen, and oxygen only and does not contain a carboxyl group (COOH) in its molecule.

In an embodiment, the polyol is selected from the group consisting of monosaccharides, oligosaccharides, water-soluble polysaccharides, compounds of general formula (P-I) or dimers or trimers of compounds of general formula (P-I): 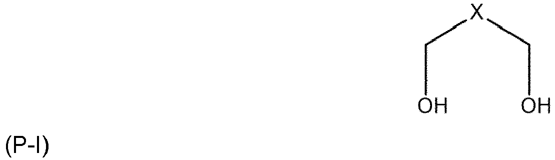 wherein X is 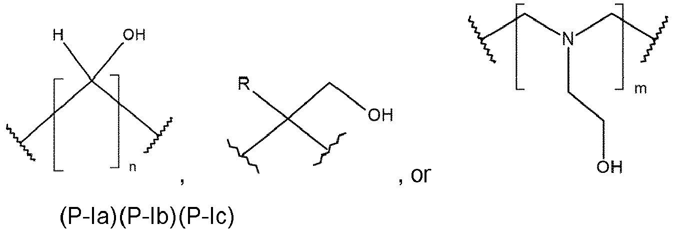 wherein
R is -CH₂OH, -NH₂,
n is an integer from 1 to 4,
m is an integer from 1 to 8.

In one embodiment, the polyol is selected from saccharides. Useful saccharides include monosaccharides, such as glucose and fructose; disaccharides, such as lactose and sucrose; trisaccharides, such as raffinose; and water-soluble polysaccharides, such as amylose and maltodextrins. Monosaccharides and disaccharides, in particular sucrose, are especially preferred.

In another preferred embodiment, the polyol is selected from the group consisting of compounds consisting of carbon, hydrogen, and oxygen only and contains neither a carboxyl group (COOH) nor a carbonyl group (C=O) in its molecule. It is understood that the term "carbonyl group" encompasses the tautomeric form of the C=O group, i.e. a pair of doubly bonded carbon atoms adjacent to a hydroxyl group (-C=C(OH)-).

Compounds of formula (P-I) wherein X is (P-Ia) are generally referred to as sugar alcohols. Sugar alcohols are organic compounds, typically derived from sugars, containing one hydroxyl group (-OH) attached to each carbon atom. Useful sugar alcohols are mannitol, sorbitol, xylitol, arabitol, erythritol and glycerol. Among these, glycerol is particularly preferred. It is envisaged that carbonates of polyhydric alcohols such as glycerol carbonate can act as a polyol source.

Compounds of formula (P-I) wherein X is (P-Ib) include pentaerythritol, and tris(hydroxymethyl)aminomethane.

Compounds of formula (P-I) wherein X is (P-Ic) include triethanolamine.

Dimers or trimers denote compounds wherein two or three molecules of general formula (P-I) are linked via an ether bridge and which are formally derived from a condensation reaction with elimination of one or two molecules of water. Examples of dimers and trimers of compounds of formula (P-I) include dipentaerythritol and tripentaerythritol.

### Cementitious binder

The method of the present invention can be used with a variety of cementitious binders comprising one or more silicate mineral phases and one or more calcium aluminate mineral phases.

In general, the calcium silicate mineral phases and calcium aluminate mineral phases constitute at least 90 wt.-% of the cementitious binder. Further, the calcium silicate mineral phases preferably constitute at least 60 wt.-% of the cementitious binder, more preferably at least 65 wt.-%, most preferably 65 to 75 wt.-%.

Conveniently, the mineralogical phases are herein indicated by their cement notation. The primary compounds are represented in the cement notation by the oxide varieties: C for CaO, M for MgO, S for SiO₂, A for Al₂O₃, $ for SO₃, F for Fe₂O₃, and H for H₂O.

Suitably, the calcium silicate mineral phases are selected from the group consisting of C3S (alite) and C2S (belite). The calcium silicate mineral phases provide primarily final strength properties.

Suitably, the calcium aluminate mineral phases are selected from the group consisting of C3A, C4AF and C12A7, in particular C3A and C4AF.

In a preferred embodiment, the cementitious binder comprises a Portland cement clinker-based binder. The term "Portland cement clinker-based binder" denotes any cement compound containing Portland clinker, especially CEM I within the meaning of standard EN 197-1, paragraph 5.2. A preferred cement is ordinary Portland cement (OPC) according to DIN EN 197-1. The phases constituting Portland cement mainly are alite (C3S), belite (C2S), calcium aluminate (C3A), calcium ferroaluminate (C4AF) and other minor phases. Commercially available OPC may either contain calcium sulfate (< 7 wt.-%) or is essentially free of calcium sulfate (< 1 wt.-%).

In a preferred embodiment of the invention, the cementitious binder is controlled for its content of available aluminate, calculated as Al(OH)₄⁻. Commonly, approximate proportions of the main minerals in Portland cement are calculated by the Bogue formula which in turn is based on the elemental composition of the clinker determined, e.g., by means of X-ray fluorescence (XRF). Such methods provide the oxide composition of the elements. This means that the amount of Al is reported as Al₂O₃. It has been found that cements with apparently the same Al₂O₃ content exhibit quite different properties regarding early strength and controllability by hydration control. Cement includes very different sources of Al of mineralogical nature and solubility. It has been found that not all Al is available or accessible for the formation of ettringite. Only Al-containing mineral phases with adequate solubility in the aqueous environment of the cement paste participate in the formation of ettringite. Other Al-containing minerals such as crystalline aluminum oxides, e.g. corundum, do not generate aluminate in aqueous environments, due to their limited solubility. Consequently, elemental analysis alone cannot provide reliable values for available aluminate.

Hence, the invention relies on the available aluminate, calculated as Al(OH)₄⁻. "Available aluminate" is meant to encompass mineral phases and Al-containing compounds that are capable of generating Al(OH)₄⁻ in alkaline aqueous environments. Calcium aluminate phases, such as C3A (Ca₃Al₂O₆), dissolve in an alkaline aqueous environment to yield Al(OH)₄⁻ and Ca²⁺ ions. Herein, the concentration of mineral phases and Al-containing compounds that are capable of generating Al(OH)₄⁻ is expressed as mol of Al(OH)₄⁻ per 100 g of cementitious binder.

It is believed that the common calcium aluminate mineral phases - in contrast to crystalline aluminum oxides - are sources of available aluminate. Therefore, the amount of available aluminate in a given cementitious binder may be determined by methods capable of discriminating between the mineral phases constituting the cementitious binder. A useful method for this purpose is Rietveld refinement of an X-ray diffraction (XRD) powder pattern. This software technique is used to refine a variety of parameters, including lattice parameters, peak position, intensities and shape. This allows theoretical diffraction patterns to be calculated. As soon as the calculated diffraction pattern is almost identical to the data of an examined sample, precise quantitative information on the contained mineral phases can be determined.

Generally, calcium aluminate mineral phases capable of generating Al(OH)₄⁻ in alkaline aqueous environments are tricalcium aluminate (C3A), monocalcium aluminate (CA), mayenite (C12A7), grossite (CA2), Q-phase (C20A13M3S3) or tetracalcium aluminoferrite (C4AF). For practical purposes, if the cementitious binder is Portland cement, it generally suffices to assess the following mineral phases only: tricalcium aluminate (C3A), monocalcium aluminate (CA), mayenite (C12A7) and tetracalcium aluminoferrite (C4AF), in particular tricalcium aluminate (C3A) and tetracalcium aluminoferrite (C4AF).

Alternatively, the amount of available aluminate may be obtained by determining the total amount of Al from the elemental composition of the cementitious binder, e.g., by XRF, and subtracting therefrom the amount of crystalline aluminum compounds not capable of generating available aluminate, as determined by XRD and Rietveld refinement. This method also takes into account amorphous, soluble aluminum compounds capable of generating available aluminate. Such crystalline aluminum compounds not capable of generating available aluminates include compounds of the melilite group, e.g., gehlenite (C2AS), compounds of the spinel group, e.g., spinel (MA), mullite (Al₂Al₂₊₂ₓSi₂₋₂ₓO₁₀₋ₓ), and corundum (Al₂O₃).

In one embodiment, the invention makes use of cementitious binders containing 0.05 to 0.2 mol of available aluminate from calcium aluminate mineral phases, as determined by, e.g., XRD analysis.

Alternatively, if the cementitious binder intrinsically contains an insufficient concentration of available aluminate per 100 g of cementitious binder, an extraneous aluminate source can be added. Hence, in some embodiments, the cementitious slurry contains an extraneous aluminate source.

The extraneous aluminate source provides available aluminate as defined above. Generally, the extraneous aluminate source is a sparingly soluble aluminate source, e.g., having an aqueous solubility at 25°C and atmospheric pressure of 0.05 g L⁻¹ or lower, preferably 0.005 g L⁻¹ or lower. The limited solubility of the extraneous aluminate source acts to avoid uncontrolled premature setting of cementitious slurry. The extraneous aluminate source is contained in the cementitious slurry in an undissolved (e.g., powder) or only partially dissolved form.

Suitably, the extraneous aluminate source is selected from the group consisting of non-calciferous aluminate sources, such as amorphous aluminum hydroxide; and calciferous aluminate sources such as high alumina cement, sulfoaluminate cement or synthetic calcium aluminate mineral phases.

Preferably, amorphous aluminum hydroxide is used as the extraneous aluminate source.

High aluminate cement means a cement containing a high concentration of calcium aluminate phases, e.g., at least 30 wt.-%. More precisely, said mineralogical phase of aluminate type comprises tricalcium aluminate (C3A), monocalcium aluminate (CA), mayenite (C12A7), tetracalcium aluminoferrite (C4AF), or a combination of several of these phases.

Sulfoaluminate cement has a content of ye'elimite (of chemical formula 4CaO.3Al₂O₃.SO₃ or C4A3$ in cement notation) of typically greater than 15 wt.-%.

Suitable synthetic calcium aluminate mineral phases include amorphous mayenite (C12A7).

Preferably, the cementitious slurry contains 0.02 to 0.20 mol of total available aluminate, calculated as Al(OH)₄⁻, from the calcium aluminate mineral phases plus the optional extraneous aluminate source, per 100 g of cementitious binder. Preferably, the cementitious slurry contains at least 0.065 mol, in particular at least 0.072 mol, of total available aluminate, per 100 g of cementitious binder

It has been found that cementitious slurries containing at least 0.05 mol of total available aluminate per 100 g of cementitious binder exhibit optimum performance regarding open time before setting and early strength development. Otherwise, if the cementitious binder contains more than 0.2 mol of total available aluminate per 100 g of cementitious binder, open time is shorter as early strength development is too fast.

In a preferred embodiment, the cementitious slurry additionally comprises an extraneous sulfate source, preferably a sulfate source selected from the group consisting of gypsum, hemihydrate, anhydrite and mixtures thereof.

After incorporation of the accelerator agent, the molar ratio of total available aluminate to sulfate (including aluminate and sulfate intrinsically contained in the cement, optional extraneous aluminate and/or sulfate sources and aluminum and sulfate contained in the setting accelerator agent) is 0.4 to 3.5.

The sulfate source is a compound capable of providing sulfate ions in an alkaline aqueous environment. Generally, the sulfate source has an aqueous solubility at a temperature of 30°C to provide a sulfate ion concentration of at least 0.6 mmol g·L⁻¹. The aqueous solubility of the sulfate source is suitably determined in water with a starting pH value of 7.

Specifically, the molar ratio of total available aluminate to sulfate (including aluminate and sulfate intrinsically contained in the cement, optional extraneous aluminate and/or sulfate sources and aluminum and sulfate contained in the setting accelerator agent) is in the range of 0.4 to 3.5, preferably 0.57 to 0.8, in particular about 0.67. This means that the mixing ratios in the composition are adjusted so that the highest possible proportion of ettringite is formed from the available aluminate.

As mentioned earlier, Portland cement in its commercially available form typically contains small amounts of a sulfate source. If the intrinsic amount of sulfate is unknown, it can be determined by methods familiar to the skilled person such as elemental analysis by XRF. As the sulfate source commonly used in the cement production, alkaline earth metal sulfates, alkali metal sulfates, or mixed forms thereof, such as gypsum, hemihydrate, anhydrite, arkanite, thenardite, syngenite, langbeinite, are typically crystalline, the amount thereof can also be determined by XRD. Both the intrinsic amount of sulfate and any added extraneous sulfate source are considered in the calculation of the molar ratio of total available aluminate to sulfate.

In general, the extraneous sulfate source may be selected from the group consisting of calcium sulfate dihydrate, anhydrite, α- and β-hemihydrate, i.e. α-bassanite and β-bassanite, or mixtures thereof. Preferably, the calcium sulfate source is α-bassanite and/or β-bassanite. The sulfate source is not especially limited, other possible sulfate sources are for example alkali metal sulfates like potassium sulfate or sodium sulfate.

It is envisaged that an additive can act as a source of both aluminate and sulfate, such as aluminum sulfate hexadecahydrate or aluminum sulfate octadecahydrate. Preferably, the sulfate source is a calcium sulfate source.

Preferably, the mineral foam comprises sulfate, inclusive of the intrinsic SO4 content of the binder and any added extraneous sulfate source, in an amount in the range of from 0.025 to 0.5 mol, per 100 g of cementitious binder.

### Supplementary Cementitious Materials

In an embodiment, the mineral foam additionally comprises at least one of a latent hydraulic binder, a pozzolanic binder and a filler material.

Herein, a "latent hydraulic binder" is preferably a binder in which the molar ratio (CaO + MgO):SiO₂ is from 0.8 to 2.5 and particularly from 1.0 to 2.0. In general terms, the above-mentioned latent hydraulic binders can be selected from the group consisting of industrial and/or synthetic slag, in particular from blast furnace slag, electrothermal phosphorous slag, steel slag and mixtures thereof. The "pozzolanic binders" can generally be selected from the group consisting of amorphous silica, preferably precipitated silica, fumed silica and microsilica, ground glass, metakaolin, aluminosilicates, fly ash, preferably brown-coal fly ash and hard-coal fly ash, natural pozzolans such as tuff, trass and volcanic ash, calcined clays, burnt shale, rice husk ash, natural and synthetic zeolites and mixtures thereof.

The slag can be either industrial slag, i.e. waste products from industrial processes, or else synthetic slag. The latter can be advantageous because industrial slag is not always available in consistent quantity and quality.

Blast furnace slag (BFS) is a waste product of the glass furnace process. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depend on origin and treatment method, and grinding fineness influences reactivity here. The Blaine value is used as parameter for grinding fineness, and typically has an order of magnitude of from 200 to 1000 m² kg⁻¹, preferably from 300 to 500 m² kg⁻¹. Finer milling gives higher reactivity.

Herein, the expression "blast furnace slag" is however intended to comprise materials resulting from all of the levels of treatment, milling, and quality mentioned (i.e. BFS, GBFS and GGBFS). Blast furnace slag generally comprises from 30 to 45% by weight of CaO, about 4 to 17% by weight of MgO, about 30 to 45% by weight of SiO₂ and about 5 to 15% by weight of Al₂O₃, typically about 40% by weight of CaO, about 10% by weight of MgO, about 35% by weight of SiO₂ and about 12% by weight of Al₂O₃.

Electrothermal phosphorous slag is a waste product of electrothermal phosphorous production. It is less reactive than blast furnace slag and comprises about 45 to 50% by weight of CaO, about 0.5 to 3% by weight of MgO, about 38 to 43% by weight of SiO₂, about 2 to 5% by weight of Al₂O₃ and about 0.2 to 3% by weight of Fe₂O₃, and also fluoride and phosphate. Steel slag is a waste product of various steel production processes with greatly varying composition.

Amorphous silica is preferably an X ray-amorphous silica, i.e. a silica for which the powder diffraction method reveals no crystallinity. The content of SiO₂ in the amorphous silica is advantageously at least 80% by weight, preferably at least 90% by weight. Precipitated silica is obtained on an industrial scale by way of precipitating processes starting from water glass. Precipitated silica from some production processes is also called silica gel.

Fumed silica is produced via reaction of chlorosilanes, for example silicon tetrachloride, in a hydrogen/oxygen flame. Fumed silica is an amorphous SiO₂ powder of particle diameter from 5 to 50 nm with specific surface area of from 50 to 600 m² g⁻¹.

Microsilica is a by-product of silicon production or ferrosilicon production, and likewise consists mostly of amorphous SiO₂ powder. The particles have diameters of the order of magnitude of 0.1 µm. Specific surface area is of the order of magnitude of from 15 to 30 m² g⁻¹.

Metakaolin is produced when kaolin is dehydrated. Whereas at from 100 to 200°C kaolin releases physically bound water, at from 500 to 800°C a dehydroxylation takes place, with collapse of the lattice structure and formation of metakaolin (Al₂Si₂O₇). Accordingly, pure metakaolin comprises about 54% by weight of SiO₂ and about 46% by weight of Al₂O₃.

Fly ash is produced inter alia during the combustion of coal in power stations. Class C fly ash (brown-coal fly ash) comprises according to WO 08/012438 about 10% by weight of CaO, whereas class F fly ash (hard-coal fly ash) comprises less than 8% by weight, preferably less than 4% by weight, and typically about 2% by weight of CaO.

Preferably, the cementitious binder, before being mixed with water in the presence of the set control agent, comprises less than 5 wt.-%, more preferably less than 3.5 wt.-%, most preferably less than 2 wt.-% of cementitious hydration products, relative to the total weight of the cementitious binder. It generally suffices to assess the following cementitious hydration products: ettringite, portlandite, syngenite. The presence and concentrations of these cementitious hydration products can be determined by Rietveld refinement of an X-ray diffraction (XRD) powder pattern. This means that the cementitious binder has no history of storage in high humidity environments. We believe that otherwise, ettringite among other cementitious hydration products is formed already in the powdery composition. Although these ettringite crystals are broken up at the time of mixing the cementitious binder with water at the time of use, the ettringite formation control provided by the invention is less prominent. Thus, storage of the cementitious binder in high humidity environments should be avoided.

### Dispersant

In a preferred embodiment, the cementitious slurry additionally comprises a dispersant.

In order to achieve the conveyability or pumpability described above, a water reducer, in particular, a plasticizer or a super-plasticizer, preferably a plasticizer based on polyoxy polycarboxylate or phosphonates, is preferably added to the construction material before the conveying step.

A water reducer makes it possible to reduce the amount of mixing water for a given workability by typically 10-15%. By way of example of water reducers, mention may be made of lignosulphonates, hydroxycarboxylic acids, carbohydrates, and other specific organic compounds, for example glycerol, polyvinyl alcohol, sodium alumino-methyl-siliconate and sulfanilic acid as described in the Concrete Admixtures Handbook, Properties Science and Technology, V.S. Ramachandran, Noyes Publications, 1984.

Super-plasticisers belong to a new class of water reducers and are capable of reducing water contents of mixing water, for a given workability, by approximately 30% by mass. By way of example of a super-plasticiser, the PCP super-plasticisers may be noted. The term "PCP" or "polyoxy polycarboxylate" is to be understood herein as a copolymer of acrylic acids or methacrylic acids and their esters of polyoxy ethylene (POE).

It will be appreciated that a number of useful dispersants contain carboxyl groups, salts thereof or hydrolysable groups releasing carboxyl groups upon hydrolysis. Preferably, the milliequivalent number of carboxyl groups contained in these dispersant (or of carboxyl groups releasable upon hydrolysis of hydrolysable groups contained in the dispersant) is lower than 3.0 meq/g, assuming all the carboxyl groups to be in unneutralized form.

Examples of useful dispersants include
- comb polymers having a carbon-containing backbone to which are attached pendant cement-anchoring groups and polyether side chains,
- non-ionic comb polymers having a carbon-containing backbone to which are attached pendant hydrolysable groups and polyether side chains, the hydrolysable groups upon hydrolysis releasing cement-anchoring groups,
- colloidally disperse preparations of polyvalent metal cations, such as Al³⁺, Fe³⁺ or Fe²⁺, and a polymeric dispersant which comprises anionic and/or anionogenic groups and polyether side chains, and the polyvalent metal cation is present in a superstoichiometric quantity, calculated as cation equivalents, based on the sum of the anionic and anionogenic groups of the polymeric dispersant,
- sulfonated melamine-formaldehyde condensates,
- lignosulfonates,
- sulfonated ketone-formaldehyde condensates,
- sulfonated naphthalene-formaldehyde condensates,
- phosphonate containing dispersants, preferably the phosphonate containing dispersants comprise at least one polyalkylene glycol unit, and
- mixtures thereof.

Preferably, the dispersant is present in a weight percentage of 0.005 to 1.0, preferably 0.05 to 0.5, more preferably 0.02 to 0.15, relative to the cementitious binder.

Comb polymers having a carbon-containing backbone to which are attached pendant cement-anchoring groups and polyether side chains are particularly preferred. The cement-anchoring groups are anionic and/or anionogenic groups such as carboxylic groups, phosphonic or phosphoric acid groups or their anions. Anionogenic groups are the acid groups present in the polymeric dispersant, which can be transformed to the respective anionic group under alkaline conditions.

Preferably, the structural unit comprising anionic and/or anionogenic groups is one of the general formulae (Ia), (Ib), (Ic) and/or (Id): 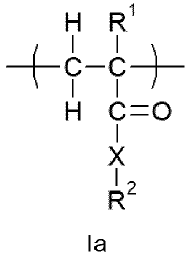 wherein
- R¹: is H, C₁-C₄ alkyl, preferably H or methyl;
- X: is NH-(Cₙ₁H₂ₙ₁) or O-(Cₙ₁H₂ₙ₁) with n1 = 1, 2, 3 or 4, or a chemical bond, the nitrogen atom or the oxygen atom being bonded to the CO group;
- R²: is OM, PO₃M₂, or O-PO₃M₂; with the proviso that X is a chemical bond if R² is OM; 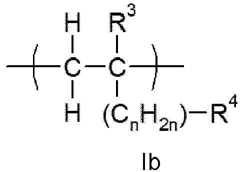
wherein
- R³: is H or C₁-C₄ alkyl, preferably H or methyl;
- n: is 0, 1, 2, 3 or 4;
- R⁴: is PO₃M₂, or O-PO₃M₂; 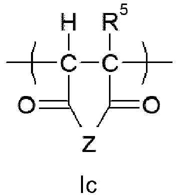
wherein
- R⁵: is H or C₁-C₄ alkyl, preferably H;
- Z: is O or NR⁷;
- R⁷: is H, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂, and
- n1: is 1, 2, 3 or 4; 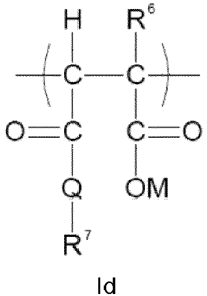
wherein
- R⁶: is H or C₁-C₄ alkyl, preferably H;
- Q: is NR⁷ or O;
- R⁷: is H, (Cₙ₁H₂ₙ₁)-OH, (Cₙ₁H₂ₙ₁)-PO₃M₂, (Cₙ₁H₂ₙ₁)-OPO₃M₂, (C₆H₄)-PO₃M₂, or (C₆H₄)-OPO₃M₂,
- n1: is 1, 2, 3 or 4; and
where each M independently is H or a cation equivalent.

Preferably, the structural unit comprising a polyether side chain is one of the general formulae (IIa), (IIb), (IIc) and/or (Ild): 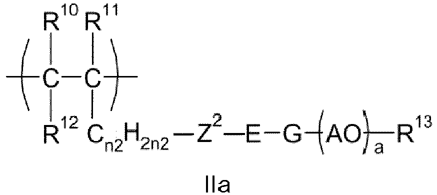 wherein
- R¹⁰, R¹¹ and R¹²: independently of one another are H or C₁-C₄ alkyl, preferably H or methyl;
- Z²: is O or S;
- E: is C₂-C₆ alkylene, cyclohexylene, CH₂-C₆H₁₀, 1,2-phenylene, 1,3-phenylene or 1,4-phenylene;
- G: is O, NH or CO-NH; or
- E and G: together are a chemical bond;
- A: is C₂-C₅ alkylene or CH₂CH(C₆H₅), preferably C₂-C₃ alkylene;
- n2: is 0, 1, 2, 3, 4 or 5;
- a: is an integer from 2 to 350, preferably 10 to 150, more preferably 20 to 100;
- R¹³: is H, an unbranched or branched C₁-C₄ alkyl group, CO-NH₂ or COCH₃; 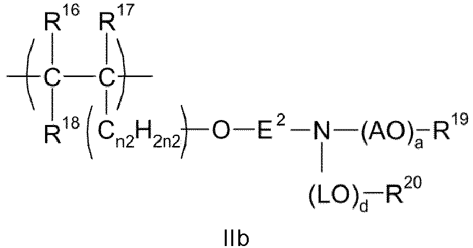
wherein
- R¹⁶, R¹⁷ and R¹⁸: independently of one another are H or C₁-C₄ alkyl, preferably H;
- E²: is C₂-C₆ alkylene, cyclohexylene, CH₂-C₆H₁₀, 1,2-phenylene, 1,3-phenylene, or 1,4-phenylene, or is a chemical bond;
- A: is C₂-C₅ alkylene or CH₂CH(C₆H₅), preferably C₂-C₃ alkylene;
- n2: is 0, 1, 2, 3, 4 or 5;
- L: is C₂-C₅ alkylene or CH₂CH(C₆H₅), preferably C₂-C₃ alkylene;
- a: is an integer from 2 to 350, preferably 10 to 150, more preferably 20 to 100;
- d: is an integer from 1 to 350, preferably 10 to 150, more preferably 20 to 100;
- R¹⁹: is H or C₁-C₄ alkyl; and
- R²⁰: is H or C₁-C₄ alkyl; 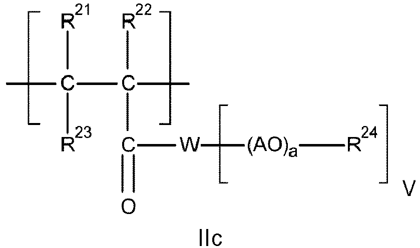
wherein
- R²¹, R²² and R²³: independently are H or C₁-C₄ alkyl, preferably H;
- W: is O, NR²⁵, or is N;
- V: is 1 if W = O or NR²⁵, and is 2 if W = N;
- A: is C₂-C₅ alkylene or CH₂CH(C₆H₅), preferably C₂-C₃ alkylene;
- a: is an integer from 2 to 350, preferably 10 to 150, more preferably 20 to 100;
- R²⁴: is H or C₁-C₄ alkyl;
- R²⁵: is H or C₁-C₄ alkyl; 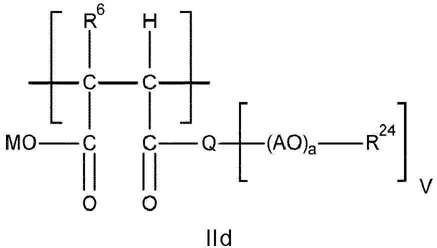
wherein
- R⁶: is H or C₁-C₄ alkyl, preferably H;
- Q: is NR¹⁰, N or O;
- V: is 1 if Q = O or NR¹⁰ and is 2 if Q = N;
- R¹⁰: is H or C₁-C₄ alkyl;
- A: is C₂-C₅ alkylene or CH₂CH(C₆H₅), preferably C₂-C₃ alkylene; and
- a: is an integer from 2 to 350, preferably 10 to 150, more preferably 20 to 100;
where each M independently is H or a cation equivalent.

The molar ratio of structural units (I) to structural units (II) varies from 1:3 to about 10:1, preferably 1:1 to 10:1, more preferably 3:1 to 6:1. The polymeric dispersants comprising structural units (I) and (II) can be prepared by conventional methods, for example by free radical polymerization or controlled radical polymerization. The preparation of the dispersants is, for example, described in EP 0 894 811, EP 1 851 256, EP 2 463 314, and EP 0 753 488.

More preferably, the dispersant is selected from the group of polycarboxylate ethers (PCEs). In PCEs, the anionic groups are carboxylic groups and/or carboxylate groups. The PCE is preferably obtainable by radical copolymerization of a polyether macromonomer and a monomer comprising anionic and/or anionogenic groups. Preferably, at least 45 mol-%, preferably at least 80 mol-% of all structural units constituting the copolymer are structural units of the polyether macromonomer or the monomer comprising anionic and/or anionogenic groups.

A further class of suitable comb polymers having a carbon-containing backbone to which are attached pendant cement-anchoring groups and polyether side chains comprise structural units (III) and (IV): 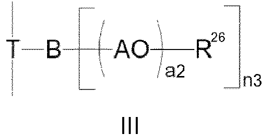 wherein
- T: is phenyl, naphthyl or heteroaryl having 5 to 10 ring atoms, of which 1 or 2 atoms are heteroatoms selected from the group consisting of N, O and S;
- n3: is 1 or 2;
- B: is N, NH or O, with the proviso that n3 is 2 if B is N and n3 is 1 if B is NH or O;
- A: is C₂-C₅ alkylene or CH₂CH(C₆H₅), preferably C₂-C₃ alkylene;
- a2: is an integer from 1 to 300;
- R²⁶: is H, C₁-C₁₀ alkyl, C₅-C₈ cycloalkyl, aryl, or heteroaryl having 5 to 10 ring atoms, of which 1 or 2 atoms are heteroatoms selected from the group consisting of N, O and S;
where the structural unit (IV) is selected from the group consisting of the structural units (IVa) and (IVb): 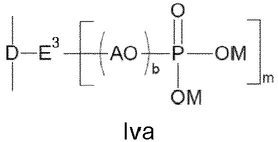 wherein
- D: is phenyl, naphthyl or heteroaryl having 5 to 10 ring atoms, of which 1 or 2 atoms are heteroatoms selected from the group consisting of N, O and S;
- E³: is N, NH or O, with the proviso that m is 2 if E³ is N and m is 1 if E³ is NH or O;
- A: is C₂-C₅ alkylene or CH₂CH(C₆H₅), preferably C₂-C₃ alkylene;
- b: is an integer from 0 to 300;
- M: independently is H or a cation equivalent; 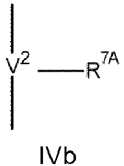
wherein
- V²: is phenyl or naphthyl and is optionally substituted by 1 or two radicals selected from the group consisting of R⁸, OH, OR⁸, (CO)R⁸, COOM, COOR⁸, SO₃R⁸ and NO₂;
- R^{7A}: is COOM, OCH₂COOM, SO₃M or OPO₃M₂;
- M: is H or a cation equivalent; and
- R⁸: is C₁-C₄ alkyl, phenyl, naphthyl, phenyl-C₁-C₄ alkyl or C₁-C₄ alkylphenyl.

Polymers comprising structural units (III) and (IV) are obtainable by polycondensation of an aromatic or heteroaromatic compound having a polyoxyalkylene group attached to the aromatic or heteroaromatic core, an aromatic compound having a carboxylic, sulfonic or phosphate moiety, and an aldehyde compound such as formaldehyde.

In an embodiment, the dispersant is a non-ionic comb polymer having a carbon-containing backbone to which are attached pendant hydrolysable groups and polyether side chains, the hydrolysable groups upon hydrolysis releasing cement-anchoring groups. Conveniently, the structural unit comprising a polyether side chain is one of the general formulae (IIa), (IIb), (IIc) and/or (Ild) discussed above. The structural unit having pendant hydrolysable groups is preferably derived from acrylic acid ester monomers, more preferably hydroxyalkyl acrylic monoesters and/or hydroxyalkyl diesters, most preferably hydroxypropyl acrylate and/or hydroxyethyl acrylate. The ester functionality will hydrolyze to (deprotonated) acid groups upon exposure to water at preferably alkaline pH, which is provided by mixing the cementitious binder with water, and the resulting acid functional groups will then form complexes with the cement component.

In one embodiment, the dispersant is selected from the group consisting of colloidally disperse preparations of polyvalent metal cations, such as Al³⁺, Fe³⁺ or Fe²⁺, and a polymeric dispersant which comprises anionic and/or anionogenic groups and polyether side chains. The polyvalent metal cation is present in a superstoichiometric quantity, calculated as cation equivalents, based on the sum of the anionic and anionogenic groups of the polymeric dispersant. Such dispersants are described in further detail in WO 2014/013077 A1, which is incorporated by reference herein.

Suitable sulfonated melamine-formaldehyde condensates are of the kind frequently used as plasticizers for hydraulic binders (also referred to as MFS resins). Sulfonated melamine-formaldehyde condensates and their preparation are described in, for example, CA 2 172 004 A1, DE 44 1 1 797 A1, US 4,430,469, US 6,555,683 and CH 686 186 and also in Ullmann's Encyclopedia of Industrial Chemistry, 5th Ed., vol. A2, page 131, and Concrete Admixtures Handbook - Properties, Science and Technology, 2. Ed., pages 411, 412. Preferred sulfonated melamine-formaldehyde condensates encompass (greatly simplified and idealized) units of the formula 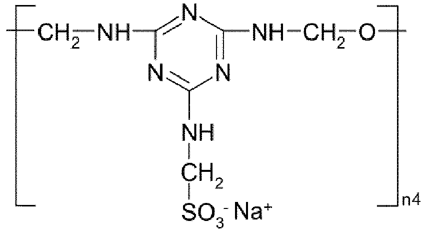 in which n4 stands generally for 10 to 300. The molar weight is situated preferably in the range from 2500 to 80 000. Additionally, to the sulfonated melamine units it is possible for other monomers to be incorporated by condensation. Particularly suitable is urea. Moreover, further aromatic units as well may be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. An example of melaminesulfonate-formaldehyde condensates are the Melment^{®} products distributed by Master Builders Solutions Deutschland GmbH.

Suitable lignosulfonates are products which are obtained as by-products in the paper industry. They are described in Ullmann's Encyclopedia of Industrial Chemistry, 5th Ed., vol. A8, pages 586, 587. They include units of the highly simplified and idealizing formula

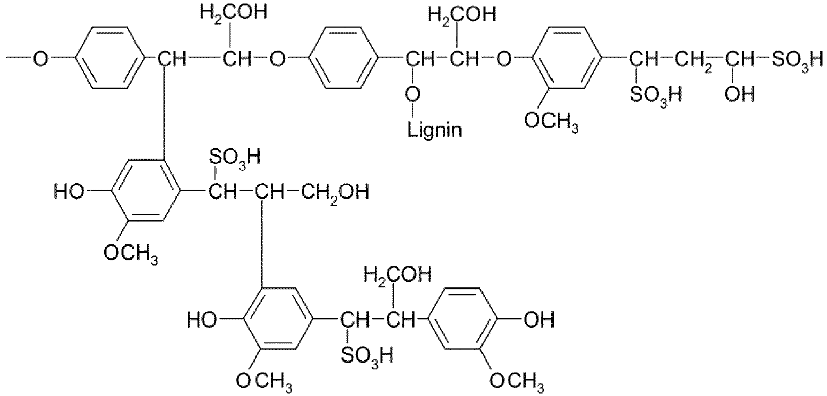

Lignosulfonates have molar weights of between 2000 and 100 000 g/mol. In general, they are present in the form of their sodium, calcium and/or magnesium salts. Examples of suitable lignosulfonates are the Borresperse products distributed by Borregaard LignoTech, Norway.

Suitable sulfonated ketone-formaldehyde condensates are products incorporating a monoketone or diketone as ketone component, preferably acetone, butanone, pentanone, hexanone or cyclohexanone. Condensates of this kind are known and are described in WO 2009/103579, for example. Sulfonated acetone-formaldehyde condensates are preferred. They generally comprise units of the formula (according to J. Plank et al., J. Appl. Poly. Sci. 2009, 2018-2024): 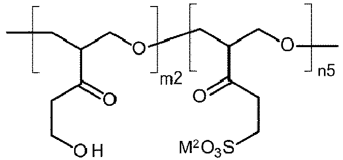 where m2 and n5 are generally each 10 to 250, M² is an alkali metal ion, such as Na⁺, and the ratio m2:n5 is in general in the range from about 3:1 to about 1:3, more particularly about 1.2:1 to 1:1.2. Furthermore, it is also possible for other aromatic units to be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. Examples of suitable sulfonated acetone-formaldehyde condensates are the Melcret K1L products distributed by Master Builders Solutions Deutschland GmbH.

Suitable sulfonated naphthalene-formaldehyde condensates are products obtained by sulfonation of naphthalene and subsequent polycondensation with formaldehyde. They are described in references including Concrete Admixtures Handbook - Properties, Science and Technology, 2. Ed., pages 411 -413 and in Ullmann's Encyclopedia of Industrial Chemistry, 5th Ed., vol. A8, pages 587, 588. They comprise units of the formula

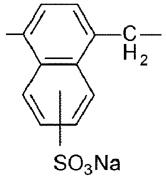

Typically, molar weights (Mw) of between 1,000 and 50,000 g/mol are obtained. Furthermore, it is also possible for other aromatic units to be incorporated by condensation, such as gallic acid, aminobenzenesulfonic acid, sulfanilic acid, phenolsulfonic acid, aniline, ammoniobenzoic acid, dialkoxybenzenesulfonic acid, dialkoxybenzoic acid, pyridine, pyridinemonosulfonic acid, pyridinedisulfonic acid, pyridinecarboxylic acid and pyridinedicarboxylic acid. Examples of suitable sulfonated β-naphthalene-formaldehyde condensates are the Melcret 500 L products distributed by Master Builders Solutions Deutschland GmbH.

Generally, phosphonate containing dispersants incorporate phosphonate groups and polyether side groups.

Suitable phosphonate containing dispersants are those according to the following formula

R-(OA²)ₙ₆-N-[CH₂-PO(OM³₂)₂]₂

wherein
- R: is H or a hydrocarbon residue, preferably a C₁-C₁₅ alkyl radical,
- A²: is independently C₂-C₁₈ alkylene, preferably ethylene and/or propylene, most preferably ethylene,
- n6: is an integer from 5 to 500, preferably 10 to 200, most preferably 10 to 100, and
- M³: is H, an alkali metal, 1/2 alkaline earth metal and/or an amine.

### Foaming

The cementitious slurry is foamed. Foaming means the injection of an inert gas into the slurry or the generation of an inert gas within the slurry to create a ternary system, wherein one phase is gaseous, one phase is liquid, and one phase is solid.

The gaseous phase is present as fine gas bubbles separated by cell walls obtained from the liquid and solid phases. The cell walls meet each other at edges, which meet each other at nodes, thereby forming a framework. The content of the gaseous phase in the inorganic foam may vary in a range of from 40 to 99%, preferably from 90 to 95% by volume.

The gas phase present in the foam can be introduced or generated by chemical foaming, mechanical foaming and combinations thereof. Non-limiting examples of gases comprise air, nitrogen, noble gas, carbon dioxide, hydrocarbons, hydrogen, oxygen, and mixtures thereof.

Mechanical foaming may be performed for example by using a mixer, or by an oscillating process, or by a stator-rotor process.

The gas phase can also be introduced into the foam by chemical foaming, wherein the chemical foaming process is suitable to liberate a gas. Preferably, blowing agents are used, which evaporate, decompose, or react with water and/or an acid, so as to liberate the gas. Non-limiting examples of blowing agents are peroxides, such as hydrogen peroxide, dibenzylperoxide, peroxobenzoic acid, peroxoacetic acid, alkali metal peroxides, perchloric acid, peroxomonosulfuric acid, dicumyl peroxide or cumyl hydroperoxide; isocyanates, carbonates and bicarbonates, such as CaCOs, Na₂CO₃, and NaHCOs, which are preferably used in combination with an acid, e.g., a mineral acid; metal powders, such as aluminum powder; azides, such as methyl azide; hydrazides, such as p-toluenesulfonylhydrazide; hydrazine.

In a preferred embodiment, chemical foaming involves catalytic decomposition of a peroxide. Suitable catalysts preferably comprise Mn²⁺, Mn⁴⁺, Mn⁷⁺ or Fe³⁺ cations. Alternatively, the enzyme catalase may be used as catalyst. Non-limiting examples of suitable catalysts are MnO₂ and KMnO₄. Such catalysts are preferably used in combination with peroxide blowing agents. Further details regarding the components as used in the process for preparing a particle-stabilized inorganic foam based on a Portland cement clinker-based cementitious binder, to the inorganic foams thus obtained and to elements of construction comprising these inorganic foams are provided hereinafter.

### Use of the foams

In a preferred embodiment, the invention comprises casting the foamed or unfoamed cementitious slurry in a mould, foaming the unfoamed cementitious slurry, allowing the foamed cementitious slurry to set, and demoulding.

In another preferred embodiment, the invention comprises applying the foamed or unfoamed cementitious slurry onto a support and/or introducing the foamed or unfoamed cementitious slurry into a void space, foaming the unfoamed cementitious slurry, and allowing the foamed cementitious slurry to set.

In an embodiment, the invention comprises a mineral foam obtainable by the method according to the invention for preparing a mineral foam.

The mineral foam according to the invention may have open cell or closed cell structure.

In another embodiment, the invention comprises the use of the mineral foam according to the invention as a thermal insulator, acoustic insulator or acoustic absorber, for fire protection and/or as a construction material. In another embodiment, the mineral foam having open cell structure is used as an acoustic insulator or acoustic absorber whereas the mineral foam having closed cell structure is used as a thermal insulator, for fire protection and/or as a construction material.

In a further aspect, the invention provides a method of manufacturing a building material comprising forming the mineral foam according to the invention into a material selected from the group consisting of a thermal insulator, an acoustic insulator, an acoustic absorber, a fire protection element and a construction material.

The present invention can be further explained and illustrated on the basis of the figures and examples that follow.

### Examples

### Methods

Initial and final Vicat setting time after the addition of setting accelerator agent.

### Equipment: TonyMIX mixer, manual Vicat needle

Initial and final setting times are measured according to DIN EN 196-3 using a Vicat needle consisting of a cylinder weighing 300 ± 1 g and a needle point with a diameter of 1.13 ± 0.05 mm. The initial setting time is defined as the time at which a paste or mortar deposited in the mold begins to oppose resistance to penetration by the Vicat needle. In practice, the Vicat needle is allowed to fall by gravity. When the needle does not touch the bottom of the mold due to the resistance of the material, the setting has started. Final setting, on the other hand, is defined as having taken place when the Vicat needle, in contact with the upper side of the material, is not breaking its structure but only leaves the print of the pressure of the point of the needle.

Setting time for comparative samples is determined using a fully automated Vicat-measuring-system from DETTKI equipped with Vicat needle and two different loads (300 g and 1000 g). The measurement was conducted according to DIN EN 196-3.

### Dry Density measurement

Foam blocks were prepared by pouring a mix of suspension and hydrogen peroxide into a mold and letting the foam expand. After expansion (around 30 min), the foam surface was covered by a plastic wrap to prevent the surface from drying and cured for 24 h at room conditions. The following day, the plastic wrap was removed and the cured foam block demolded. After demolding, foam prisms (16/4/4 cm³) were cut from the foam block and after drying for 21 days after foaming at a temperature of 23°C and relative humidity of 50%, a hardened and dried foam prism was obtained. Dry density was measured by weighing the samples on a laboratory scale and dividing the weight by the volume.

### Compressive strength measurement

Foam samples obtained for density measurement were each cut into two prisms of about 8/4/4 cm³ and measured for compressive strength (= comp. strength) according to DIN EN 826 using a universal tesing machine (Inspekt Blue, Hegewald&Peschke) equipped with a 5 kN load cell.

### Experiment 1:

Reference foam and two foam mixes comprising the set control/ accelerator combination were prepared as shown in table 2. The Foaming Powder was first dispersed in water. Then, a dry mix of cement, sand, fly ash, microsilica, anhydrite, amorphous aluminum oxide and the solid constituents of the set control agent, i.e. sodium gluconate and potassium carbonate, were added and homogenized for 15 min. After 14 min and 30 seconds of mixing, the liquid components constitutes of the set control agent, i.e. Sokalan PA15 and Glycerin, were added to the suspension. 15 seconds prior before mixing was ended, the acceleration agent, i.e. MasterRoc SA 160, was added. Foaming of the suspension was initiated by adding the hydrogen peroxide and mixing. The so obtained slurry was poured into a mold where the foam expansion evolved until the decomposition of the hydrogen peroxide was completed.

**Table 2:**

| | 1 | 2 | 3* |
|---|---|---|---|
| Milke CEM I 52.5 R [g] | 500 | 500 | 500 |
| Quartz Sand (0.1-0.3 mm) [g] | 346.5 | 346.5 | 346.5 |
| Fly Ash [g] | 107.5 | 107.5 | 107.5 |
| Micro Silica [g] | 46 | 46 | 46 |
| | | | |
| Foaming Powder [g] (45.322 g CaCO₃, 0.452g Nonanoic Acid 97%, 2.096g MnO₂) | 47.87 | 47.87 | 47.87 |
| Anhydrite [g] | 50 | 50 | 50 |
| Amorphous Aluminum Oxide [g] | 12 | 12 | 12 |
| Set control agent [g] (4.504 g Potassium | 9.588 | 9.588 | - |
| Carbonate; 0.255 g Sodium Gluconate, 2.366 g Sokalan PA 15^{[1]}, 2.493g Glycerin) | | | |
| Water [g] | 562.68 | 562.68 | 557.40 |
| Accelerator agent [g] (MasterRoc SA 160) | - | 78.36 | - |
| Hydrogen Peroxide (30 wt%) [g] | 75.74 | 75.74 | 75.74 |
| | | | |
| Ratio Water/binder | 0.55 | 0.55 | 0.55 |

| | | | |
|---|---|---|---|
| *comparative example ^{[1]} polyacrylic acid, concentration 45 wt.-% | | | |

The initial setting time and the final setting time were determined using aliquots of the suspension taken prior to the addition of hydrogen peroxide. The density and compressive strength were measured of cured and dried foam samples after 21 days. The results are shown in table 3.

**Table 3:**

| | 1 | 2 | 3* |
|---|---|---|---|
| Initial setting time [min] | 70 | 15 | 18 |
| Final setting time [min] | 130 | 30 | 50 |
| Density after 21 d [g/L] | 136 | 147 | 121 |
| Compressive strength after 21 d [kPa] | 56 | 64 | 16 |

In examples 1 through 3, an intrinsically low aluminate CEM I cement was supplemented with extraneous sources of available aluminate and sulfate. The compressive strength obtained for examples 1 and 2 was significantly higher compared to the compressive strength obtained for both the supplemented binder in example 3. Example 2 demonstrates that it is possible to improve initial and final setting time by first adjusting the cement composition (if necessary) and using the set control and accelerator formulation.

### Experiment 2

Two additional cements were tested to verify the compatibility of the set control-technology with different cement types. Because of a more favorable content of available aluminate, addition of Anhydrite and Amorphous Aluminum Oxide was not necessary. Preparation method was the same as in Experiment 1. The composition of the foams are shown in table 4. The initial setting time and the final setting time were determined using aliquots of the suspension taken prior to the addition of hydrogen peroxide. The density and compressive strength were measured of cured and dried foam samples after 21 days. The results are shown in table 5.

**Table 4:**

| | 4 | 5 |
|---|---|---|
| Karlstadt CEM I 52.5 R [g] | 562.0 | - |
| Karlstadt CEM II 42.5 N [g] | - | 562.0 |
| Quartz Sand (0.1-0.3 mm) [g] | 346.5 | 346.5 |
| Fly Ash [g] | 107.5 | 107.5 |
| Micro Silica [g] | 46 | 46 |
| | | |
| Foaming Powder [g] | 47.87 | 47.87 |
| (45.322 g CaCO₃, 0.452g Nonanoic Acid 97%, 2.096g MnO₂) | | |
| Anhydrite [g] | - | - |
| Amorphous Aluminum Oxide [g] | - | - |
| Set control agent [g] | 9.588 | 9.588 |
| (4.504 g Sodium Carbonate; 0.255 g Sodium Gluconate, 2.366 g Sokalan PA 15^{[1]}, 2.493g Glycerin) | | |
| Water [g] | 562.68 | 562.68 |
| Accelerator agent [g] | - | - |
| Hydrogen Peroxide (30wt%) [g] | 75.74 | 75.74 |
| | | |
| Ratio Water/binder | 0.55 | 0.55 |

| | | |
|---|---|---|
| ^{[1]} polyacrylic acid, concentration 45 wt.-% | | |

**Table 5:**

| | 4 | 5 |
|---|---|---|
| Initial setting time [min] | 70 | >700 |
| Final setting time [min] | 300 | >700 |
| Density after 21 d [g/L] | 142 | 153 |
| Compressive strength after 21 d [kPa] | 70 | 23 |

In both examples, stable foams were obtained, showing the applicability of the set control technology to different cements. Just by using the set control agent, higher strength was obtained in example 4 and 5 compared to the reference (example 3). Karlstadt CEM II C-M (S-LL) 42.5 N is a slow-setting Portland composite cement and no setting could be observed for example 5 during the measurement time of 700 minutes. After curing for 21 days, a lower compressive strength was measured compared to the faster cement Milke CEM I (example 1), but compressive strength was still higher than the reference without set control agent (example 3).

### Experiment 3

As an alternative accelerator to MasterRoc SA 160, water glass was tested. For this experiment, a sodium waterglass (36 wt-% aqueous sodium waterglas, modulus 3.2) was used. The amount of water glass was adjusted to yield the same open time with Milke CEM I 52.5 R. Compatibility to different cements was tested using Milke CEM I 52.5 R and Karlstadt CEM II C-M (S-LL) 42.5 N. Preparation method was the same as in to Experiment 1. The compositions of the foams are shown in table 6. The initial setting time and the final setting time were determined using an aliquot of the suspension taken prior to the addition of hydrogen peroxide. The density and compressive strength were measured of cured and dried foam samples after 21 days. The results are shown in table 7.

**Table 6:**

| | 6 | 7 |
|---|---|---|
| Milke CEM I 52.5 R [g] | 500 | - |
| Karlstadt CEM II 42.5 N [g] | - | 562.0 |
| Quartz Sand (0.1-0.3 mm) [g] | 346.5 | 346.5 |
| Fly Ash [g] | 107.5 | 107.5 |
| Micro Silica [g] | 46 | 46 |
| | | |
| Foaming Powder [g] | 47.87 | 47.87 |
| (45.322 g CaCO₃, 0.452g Nonanoic Acid 97%, 2.096g MnO₂) | | |
| Anhydrite [g] | 50 | - |
| Amorphous Aluminum Oxide [g] | 12 | - |
| Set control agent [g] | 9.588 | 9.588 |
| (4.504 g Sodium Carbonate; 0.255 g Sodium Gluconate, 2.366 g Sokalan PA 15^{[1]}, 2.493g Glycerin) | | |
| Water [g] | 562.68 | 562.68 |
| Accelerator agent [g] | 22.39 | 22.39 |
| (36 wt-% aqueous Sodium waterglas, | | |
| modulus 3.2 ) | | |
| Hydrogen Peroxide (30wt%) [g] | 75.74 | 75.74 |
| | | |
| Ratio Water/binder | 0.55 | 0.55 |

| | | |
|---|---|---|
| ^{[1]} polyacrylic acid, concentration 45 wt.-% | | |

**Table 7:**

| | **6** | **7** |
|---|---|---|
| Initial setting time [min] | 15 | 440 |
| Final setting time [min] | 32 | 640 |
| Density after 21 d [g/L] | 136 | 146 |
| Compressive strength after 21 d [kPa] | 50 | 40 |

Using water glass, a comparable setting time can be achieved even at lower accelerator dosage (compare setting times 2 versus 6). After curing for 21 days, a comparable strength can be achieved (comparing strength 2 versus 6). Acceleration of slower cements is also possible (compare setting times 5 versus 7) and leads to a significant increase in 21d strength compared to the non-accelerated foam (compare strength 5 versus 7).

### Experiment 4

In this experiment, set control agents without a polymeric polycarboxylic acid (Sokalan PA 15) are investigated. Samples were prepared with Milke CEM I using no accelerator (8), accelerator MasterRoc (9) and accelerator aqueous sodium waterglas (10) without the addition of Sokalan. Preparation method was the same as in Experiment 1. The compositions of the foams are shown in table 8. The initial setting time and the final setting time were determined using aliquots of the suspension taken prior to the addition of hydrogen peroxide. The density and compressive strength were measured of cured and dried foam samples after 21 days. The results are shown in table 9. Open time was reduced significantly, so that mixing time had to be reduced from 15 down to 2 minutes.

**Table 8:**

| | **8** | **9** | **10** |
|---|---|---|---|
| Milke CEM I 52.5 R [g] | 500 | 500 | 500 |
| Quartz Sand (0.1-0.3 mm) [g] | 346.5 | 346.5 | 346.5 |
| Fly Ash [g] | 107.5 | 107.5 | 107.5 |
| Micro Silica [g] | 46 | 46 | 46 |
| | | | |
| Foaming Powder [g] | 47.87 | 47.87 | 47.87 |
| (45.322 g CaCO₃, 0.452g Nonanoic Acid 97%, 2.096g MnO₂) | | | |
| Anhydrite [g] | 50 | 50 | 50 |
| Amorphous Aluminum Oxide [g] | 12 | 12 | 12 |
| Set control agent [g] | 7.222 | 7.222 | 7.222 |
| (4.504 g Sodium Carbonate; 0.255 g Sodium Gluconate, 2.493g Glycerin) | | | |
| Water [g] | 562.68 | 562.68 | 562.68 |
| Accelerator agent [g] | - | 78.36 (MasterRoc SA 160) | 22.39 (36 wt-% aqueous sodium waterglas, modulus 3.2) |
| Hydrogen Peroxide (30wt%) [g] | 75.74 | 75.74 | 75.74 |
| | | | |
| Ratio Water/binder | 0.55 | 0.55 | 0.55 |

**Table 9:**

| | **8** | **9** | **10** |
|---|---|---|---|
| Initial setting time [min] | 21 | 11 | 17 |
| Final setting time [min] | 52 | 22 | 36 |
| Density after 21 d [g/L] | 152 | 160 | 136 |
| Compressive strength after 21 d [kPa] | 35 | 55 | 27 |

After adjustment of the mixing time, foams with a comparable density could be produced. Effectivity of the set control agent is reduced, leading to reduced setting times. Acceleration works as expected, further reducing setting times. Compressive strength of all samples was reduced compared to foams where Sokalan was used (compare 8 versus 1, 9 versus 2 and 10 versus 6).

### Experiment 5

In this experiment, set control agents without a polyol (glycerin) are investigated. Samples were prepared using Milke CEM I using only set control, accelerator MasterRoc or accelerator aqueous sodium waterglass while leaving out glycerin. Preparation method was the same as in Experiment 1. The compositions of the foams are shown in table 10. The initial setting time and the final setting time were determined using aliquots of the suspension taken prior to the addition of hydrogen peroxide. The density and compressive strength were measured of cured and dried foam samples after 21 days. The results are shown in table 11.

**Table 10:**

| | 11 | 12 | 13 |
|---|---|---|---|
| Milke CEM I 52.5 R [g] | 500 | 500 | 500 |
| Quartz Sand (0.1-0.3 mm) [g] | 346.5 | 346.5 | 346.5 |
| Fly Ash [g] | 107.5 | 107.5 | 107.5 |
| Micro Silica [g] | 46 | 46 | 46 |
| | | | |
| Foaming Powder [g] | 47.87 | 47.87 | 47.87 |
| (45.322 g CaCO₃, 0.452g Nonanoic Acid 97%, 2.096g MnO₂) | | | |
| Anhydrite [g] | 50 | 50 | 50 |
| Amorphous Aluminum Oxide [g] | 12 | 12 | 12 |
| Set control agent [g] | 7.095 | 7.095 | 7.095 |
| (4.504 g Sodium Carbonate; 0.255 g Sodium Gluconate, 2.366 g Sokalan PA 15^{[1]}) | | | |
| Water [g] | 562.68 | 562.68 | 562.68 |
| Accelerator agent [g] | - | 78.36 (MasterRoc SA 160) | 22.39 (36 wt-% aqueous sodium waterglas, modulus 3.2 ) |
| Hydrogen Peroxide (30wt%) [g] | 75.74 | 75.74 | 75.74 |
| | | | |
| Ratio Water/binder | 0.55 | 0.55 | 0.55 |

| | | | |
|---|---|---|---|
| ^{[1]} polyacrylic acid, concentration 45 wt.-% | | | |

**Table 11:**

| | **11** | **12** | **13** |
|---|---|---|---|
| Initial setting time [min] | 85 | 10 | 38 |
| Final setting time [min] | 200 | 26 | 104 |
| Density after 21 d [g/L] | 134 | 151 | 165 |
| Compressive strength after 21 d [kPa] | 48 | 61 | 40 |

Foams with comparable densities could be produced. Open times and compressive strength with and without acceleration are in the same range as foams with glycerin (compare 11 versus 1, 12 versus 2 and 13 versus 10).

### Experiment 6

In this experiment, foam stabilizing agents other than foam stabilizing particles are investigated. A foam with surfactants as air stabilizing agent was produced. Preparation method was the same as in to Experiment 1. The composition of the foam is shown in table 12. The initial setting time and the final setting time were determined using aliquots of the suspension taken prior to the addition of hydrogen peroxide. The density and compressive strength were measured of cured and dried foam samples after 21 days. The results are shown in table 13.

**Table 12:**

| | **14** |
|---|---|
| Milke CEM I 52.5 R [g] | 500 |
| Quartz Sand (0.1-0.3 mm) [g] | 346.5 |
| Fly Ash [g] | 107.5 |
| Micro Silica [g] | 46 |
| | |
| Foaming Powder [g] | - |
| MnO₂ [g] | 3.54 |
| Surfactent (Vinapor GYP 2620) [g] | 26.59 |
| Anhydrite [g] | 50 |
| Amorphous Aluminum Oxide [g] | 12 |
| Set control agent [g] | 7.095 |
| (4.504 g Sodium Carbonate; 0.255 g Sodium Gluconate, 2.366 g Sokalan PA 15^{[1]}) | |
| Water [g] | 562.68 |
| Accelerator agent [g] | 78.36 |
| (MasterRoc SA 160) | |
| Hydrogen Peroxide (30wt%) [g] | 75.74 |
| | |
| Ratio Water/binder | 0.55 |

| | |
|---|---|
| ^{[1]} polyacrylic acid, concentration 45 wt.-% | |

**Table 13:**

| | **14** |
|---|---|
| Initial setting time [min] | 9 |
| Final setting time [min] | 14 |
| Density after 21 d [g/L] | 187 |
| Compressive strength after 21 d [kPa] | 7 |

If a common surfactant is used, comparable foam densities can be achieved (compare density 14 versus 2). Open time is also in the same range as with particle stabilized foams (compare initial and final setting time 14 versus 2). Strength is significantly lower compared to the strength of a particle stabilized foam due to the open porous nature of the foams. While a particle stabilized foam leads to a closed pore structure, defoaming effects with surfactants can lead to a pore opening, significantly reducing strength of the foam structure. The degree of open pores and thus the foam strength greatly varies with the nature of the surfactant/protein used for foams stabilization and the compatibility to the used additives.

## Claims

1. A method for preparing a mineral foam comprising:
a. providing an aqueous cementitious slurry comprising
a cementitious binder,
a foam-stabilizing agent and
a set control agent;
b. foaming the cementitious slurry;
wherein the set control agent comprises (i) an α-hydroxy monocarboxylic acid or a salt thereof and (ii) an oxyanion source selected from the group consisting of a borate source and a carbonate source.

2. Method according to claim 1, wherein the set control agent additionally comprises a polymeric polycarboxylic acid.

3. Method according to claim 1 or 2, wherein the method comprises adding an accelerator agent solution to the cementitious slurry wherein the accelerator agent comprises at least one agent selected from the group consisting of an aluminum ion source, an aluminate source and a silicate source.

4. Method according to any of the preceding claims wherein the cementitious binder comprises a Portland cement clinker-based binder.

5. Method according to any of the preceding claims, wherein the foam-stabilizing agent is selected from the group consisting of foam-stabilizing inorganic particles, surfactants and proteins.

6. Method according to claim 5, wherein the foam-stabilizing inorganic particles are inorganic particles treated with an amphiphilic compound.

7. Method according to claim 6, wherein the amphiphilic compound comprises at least one head group selected from the group consisting of a carboxylic group, a 3,4,5-trihydroxybenzoyloxy group and an amino group, and at least one tail group selected from the group consisting of aliphatic groups with 2 to 8 carbon atoms.

8. Method according to claim 6 or 7, wherein the inorganic particles are selected from the group consisting of silica particles, alumina particles, zirconia particles, calcium carbonate particles and mixtures thereof.

9. Method according to any of the preceding claims, wherein the cementitious slurry additionally comprises an extraneous sulfate source, preferably a sulfate source selected from the group consisting of gypsum, hemihydrate, anhydrite and mixtures thereof.

10. Method according to any of the preceding claims, wherein the cementitious slurry additionally comprises an extraneous aluminate source.

11. Method according to any of the preceding claims, wherein the foaming is selected from the group consisting of chemical foaming, mechanical foaming and combinations thereof.

12. Method according to claim 10, wherein the chemical foaming involves catalytic decomposition of a peroxide.

13. Method according to any of the preceding claims, wherein the aluminum ion source is selected from the group consisting of aluminum salts, aluminum complexes, and mixtures thereof, preferably aluminum sulfate.

14. Method according to any one of the preceding claims, wherein the silicate source is sodium silicate.

15. Method according to any one of the preceding claims, wherein at least one of the set control agent and the accelerator agent comprises a polyol.

16. Method according to any one of the preceding claims, wherein the cementitious slurry additionally comprises a dispersant.

17. Method according to any one of the preceding claims, comprising
c. casting the foamed or unfoamed cementitious slurry into a mould, foaming the unfoamed cementitious slurry, allowing the foamed cementitious slurry to set, and demoulding.

18. Method according to any one of the claims 1 to 16, comprising
c. applying the foamed or unfoamed cementitious slurry onto a support and/or introducing the foamed or unfoamed cementitious slurry into a void space, foaming the unfoamed cementitious slurry, and allowing the foamed cementitious slurry to set.

19. A mineral foam obtainable by the method according to any one of the preceding claims.

20. Use of the mineral foam according to claim 19 as a thermal insulator, acoustic insulator or acoustic absorber, for fire protection and/or as a construction material.

21. A method of manufacturing a building material comprising forming the mineral foam according to claim 19 into a material selected from the group consisting of a thermal insulator, an acoustic insulator, an acoustic absorber, a fire protection element and a construction material.
